# EUROPÄISCHE PATENTSCHRIFT

(11) **EP 1 164 070 B1**
(45) Veröffentlichungstag und Bekanntmachung des Hinweises auf die Patenterteilung: **23.03.2005**
(21) Anmeldenummer: 01113559.7
(22) Anmeldetag: 13.06.2001
(51) Int. Cl.: B62D 1/10

(54) **Fahrzeuglenkradbefestigung**
Fastening for a vehicle steering wheel
Fixation pour volant de véhicule

(30) Priorität: 14.06.2000 DE 20010360 U; 11.10.2000 DE 20017450 U
(43) Veröffentlichungstag der Anmeldung: 19.12.2001
(73) Patentinhaber: TRW Automotive Safety Systems GmbH, 63743 Aschaffenburg (DE)
(72) Erfinder: Nigrin, Anke, 98693 Ilmenau (DE)
(74) Vertreter: Kitzhofer, Thomas, Dipl.-Ing.

(56) Entgegenhaltungen:
- DE-U- 29 518 638
- FR-A- 2 689 584
- JP-A- 2000 095 113
- US-A- 6 033 145

## Beschreibung

Die Erfindung betrifft eine Fahrzeuglenkradbefestigung gemäß dem Oberbegriff des Anspruchs 1, durch die das Fahrzeuglenkrad an einer Lenkwelle lösbar arretiert ist.

Bei heutzutage üblicherweise mit Gassackmodulen ausgestatteten Lenkrädern ist die Arretierung des Lenkrades an der Lenkwelle lösbar auszuführen, denn Lenkräder werden nach einem Unfall komplett ausgetauscht. Durch das Vorhandensein des Gassackmoduls ist es bedeutend schwieriger geworden, die Befestigung unterzubringen, da die Zugänglichkeit von oben nicht mehr gegeben ist.

Aus der gattungsgemäßen DE 295 18 638 U ist eine Lenkradbefestigung bekannt, bei der die Lenkwelle mit der Lenkradnabe über eine Keilwellenverbindung in Umfangsrichtung verriegelt ist. Zusätzlich ist auch noch ein Keil in eine Nut in der Lenkwelle zu drücken. Der Keil wird über eine Schraube radial angetrieben. Zur Mitnahme des Keils weist dieser einen in axialer Richtung durchgehenden Schlitz auf, in den ein Schraubenkopf eindringt. Zur axialen Sicherung des Keils ist eine separate obere Platte vorgesehen.

Eine Fahrzeuglenkradbefestigung, die ebenfalls mit einer Keilwellenverbindung arbeitet, ist aus der US-A-6 033 145 bekannt. Für die axiale Verriegelung wird hier gemäß einer Ausführungsform ein Keil verwendet, der mit einem Gewinde versehen ist, in das eine Schraube eindringt. Durch Bewegen dieser Schraube kann der Keil in einer Richtung bewegt werden.

Die Erfindung schafft eine Fahrzeuglenkradbefestigung gemäß Anspruch 1, die sich durch einen einfachen Aufbau und eine äußerst stabile Fixierung auszeichnet. Bei der erfindungsgemäßen Lenkradbefestigung wird über ein einfach herzustellendes Mehrkantprofil die Drehmomentübertragung erreicht. Die axiale Fixierung erfolgt über den Keil, der an der Keilfläche anliegt und zu einer axialen Verspannung des Nabenteils auf der Lenkwelle führt. Über die axiale Verspannung kann das Spiel zwischen Welle und Nabe verhindert werden.

Der Keil erzeugt auch eine großflächige Anlage zwischen Lenkwelle, Keil und Nabenteil, was für eine erhöhte Stabilität sorgt. Bislang übliche Stiftschrauben mit konischem Ende können eine solche Stabilität nicht erzeugen.

Der Keil weist eine mittige Bohrung auf, in die ein axialer Zapfen der Antriebsschraube drehbar aufgenommen ist, wobei eine als separates Teil ausgebildete Sicherung die Antriebsschraube und den Keil in axialer Richtung verbindet. Keil und Antriebsschraube sind deshalb unterschiedliche Teile, die aus unterschiedlichen Materialien hergestellt sein können. Der Keil dreht sich beim Drehen der Antriebsschraube nicht mit.

Die Antriebsschraube ist radial auf die gedachte Mittelachse der Lenkwelle gerichtet, vorzugsweise ist auch die vom Keil auf die Lenkwelle ausgeübte resultierende Kraft (graphisch gesprochen der Kraftvektor) radial auf die gedachte Mittelachse gerichtet. Es ergibt sich damit beim Zustellen des Keiles keine Kraftkomponente, die eine Umfangsdrehung von Lenkwelle zu Nabenteil verursachen könnte.

Das Nabenteil ist ferner vorzugsweise so ausgebildet, daß der Keil axial in die Ausnehmung und über die Ausnehmung an die Führungsfläche angelegt und anschließend radial verschoben werden kann. Diese Möglichkeit verringert den Aufwand für die Herstellung des Nabenteils, denn die Montage des Keils kann über die Ausnehmung erfolgen.

Nicht nur die Montage des Keils erfolgt über die Ausnehmung, sondern auch das Verbinden von Keil mit Antriebsschraube. Die Lenkradbefestigung ist nämlich so ausgebildet, daß nach dem Einsetzen des Keils die Antriebsschraube radial von außen in die Gewindebohrung eindrehbar ist und daß die beiden Teile anschließend über die axiale Ausnehmung im Nabenteil zerstörungsfrei lösbar miteinander verbunden werden. Diese Ausbildung sorgt dafür, daß keine extrem großen, das Nabenteil schwächenden radial durchgehenden Führungen vorgesehen sein müssen, die ein radiales Einschieben des Keiles von außen durch das gesamte Nabenteil ermöglichen. Die Führung für den Keil muß nur so tief sein, daß der Keil weit genug zurückgezogen werden kann, um ein Aufsetzen und Entfernen des Lenkrads von der Lenkwelle zu erlauben und um im montierten Zustand eine Fixierung der beiden Teile zu gewährleisten.

Gemäß einer bevorzugten Ausführungsform hat die Antriebsschraube ein Feingewinde. Zusätzlich oder optional kann die Antriebsschraube oder die Gewindebohrung als selbstsichernde Schraubverbindung ausgebildet sein. Hierzu ist gemäß der bevorzugten Ausführungsform vorgesehen, daß die Antriebsschraube einen Gewindeabschnitt hat, der eine Nut aufweist, in die ein Sicherungsfaden eingelegt ist, der beim Einschrauben deformiert wird und für die Sicherung der Antriebsschraube sorgt. Mit der Ausbildung als Feingewinde und der Selbstsicherung ergibt sich ein hohes Losdrehmoment und eine hohe Vibrationssicherheit bei sehr geringem Aufwand. Zudem ist die Selbstsicherung vorzugsweise so ausgeführt, daß eine erneute Montage nach einer Demontage ohne Teileaustausch möglich ist.

Zwischen Nabe und Lenkwelle ist gemäß einer Ausgestaltung der Erfindung eine Codierung vorgesehen, beispielsweise ein Vorsprung, der in eine Nut eingreift. Durch die Codierung ist es möglich, die Nabe auf die Lenkwelle nur in einer Winkelstellung aufzustecken.

Gemäß der bevorzugten Ausführungsform hat die Lenkwelle an ihrem freien Ende eine kegelförmige Fläche, genauer gesagt grenzt das freie Ende an eine kegelförmige Fläche an der Lenkwelle an, die so relativ zur Keilfläche ausgebildet ist, daß das Nabenteil zwischen Keilfläche und kegelförmiger Fläche verspannt ist. Die kegelförmige Fläche kann somit sehr groß gehalten und zudem für die Zentrierung von Nabenteil und Lenkwelle herangezogen werden.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Fig. 1 eine Explosionsansicht einer ersten Ausführungsform der erfindungsgemäßen Fahrzeuglenkradbefestigung,
Fig. 2 eine Längsschnittansicht durch die Fahrzeuglenkradbefestigung nach Fig. 1 in montiertem Zustand des Fahrzeuglenkrads,
Fig. 3 eine Explosionsansicht einer weiteren Ausführungsform der erfindungsgemäßen Fahrzeuglenkradbefestigung und
Fig. 4 eine vergrößerte Ansicht der in den Fig. 1 und 3 gezeigten Antriebsschraube.

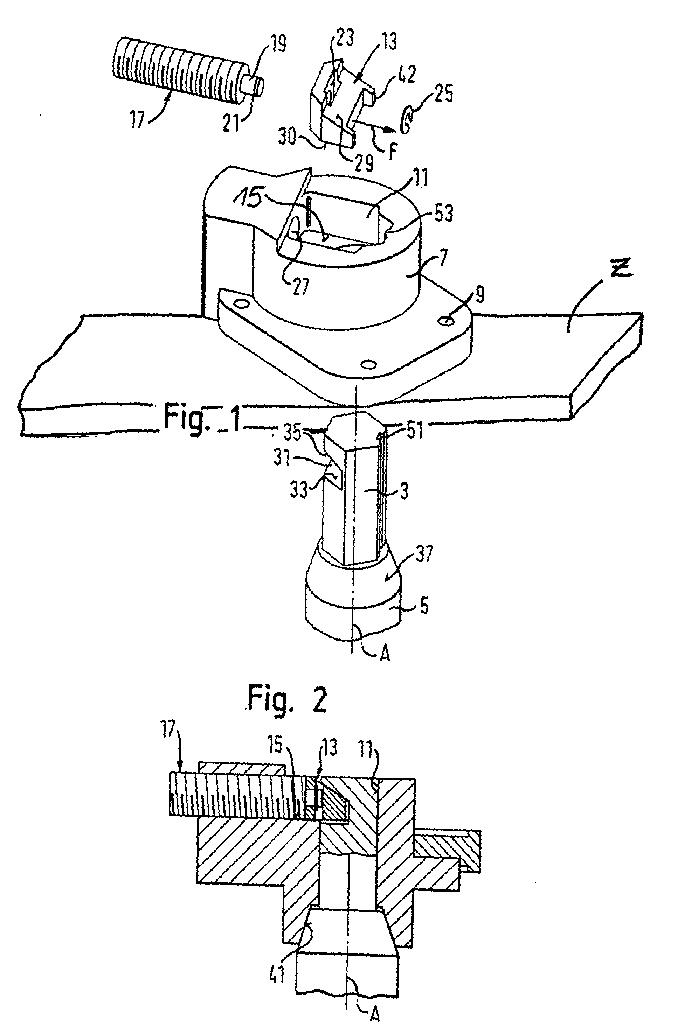

In Fig. 1 ist eine Fahrzeuglenkradbefestigung dargestellt, die ein freies Ende 3 einer Lenkwelle 5 aufweist, das als Sechskantprofil ausgebildet ist. Die Fahrzeuglenkradbefestigung weist ferner ein Nabenteil 7 auf, das über Öffnungen 9 mit dem Lenkradskelett verbunden wird, wobei das Nabenteil auch einstückig mit dem Lenkradskelett verbunden sein kann. In Fig. 1 ist ferner ein Strukturteil Z eines ansonsten nicht näher dargestellten Lenkrades gezeigt. Das Nabenteil weist eine durchgehende, dem Mehrkantprofil entsprechende mehreckige Ausnehmung 11 auf. Aufgrund der Ausbildung als Mehrkantelement hat das Nabenteil einen Querschnitt, der ein Vieleck bildet. Über die Ausnehmung 11 kann axial von oben ein Keil 13 in die Ausnehmung 11 eingesetzt werden. Die Ausnehmung 11 geht, dies ist Fig. 2 zu entnehmen, in eine radiale Führungsfläche 15 über, an der der Keil anliegt und längs der er radial verschiebbar ist. Der Keil ist mit einer Antriebsschraube 17 verbunden. Hierzu hat die Antriebsschraube 17 einen axial vorstehenden Zapfen 19 mit einer Ringnut 21, wobei der Zapfen 19 in eine Öffnung im Keil 13 gesteckt ist. Ein axialer Schlitz 23 im Keil 13 schneidet diese Öffnung, so daß über den Schlitz 23 eine Sicherung in Form eines Sicherungsrings 25 auf den Zapfen 19 aufgesetzt werden kann. Diese Befestigung erfolgt, nachdem der Keil 13 in die Ausnehmung 11 eingesetzt und die Antriebsschraube 17 in die entsprechende Gewindebohrung 27 im Nabenteil 7 eingedreht wurde. Der Keil 13 hat eine obere, schräge Keilfläche 29 und eine untere, rechtwinklig zur Achse A und zur Ausnehmung 11 verlaufende Fläche 30.

Das freie Ende 3 der Lenkwelle 5 weist eine radiale Nut 31 auf, die eine untere, rechtwinklig zur gedachten Achse A der Lenkwelle 5 verlaufende Anlagefläche 33 und eine obere, schräge Keilfläche 35 aufweist, deren Winkel zur Achse A dem Winkel der Fläche 29 zur Achse A entspricht.

Das Mehrkantprofil am freien Ende geht in eine kegelförmige Fläche 37 über, wobei, was in Fig. 2 zu erkennen ist, die Ausnehmung 11 in einen unteren, aufgeweiteten Abschnitt 41 übergeht, der eine Schräge hat, die der Schräge der kegelförmigen Fläche 37 entspricht.

Die Antriebsschraube 17 ist, im montierten Zustand, exakt radial auf die Mittelachse A der Lenkwelle gerichtet, ebenso wie die von dem Keil 13 auf die Lenkwelle 5 ausgeübte resultierende Kraft, die durch den Kraftvektor F gekennzeichnet ist. Zur Ausrichtung von Keil zu Lenkwelle 5 hat der Keil seitliche Vorsprünge 42, die seitlich an der Lenkwelle 5 angreifen.

Damit die Lenkwelle zum Nabenteil 7 exakt ausgerichtet ist und keine Fehlmontage bezüglich der Winkelstellung des Nabenteils 7 erfolgen kann, ist eine Codierung vorgesehen, bestehend aus einer axialen Nut 51 an der Lenkwelle 5 und einem entsprechenden, in die Nut 51 eingreifenden Vorsprung 53 am Nabenteil.

Nach dem Aufsetzen des Nabenteils, bei zurückgeschobenem Keil 13, wird die Antriebsschraube 17 betätigt, und der Keil 13 wandert in die Nut 31. Die Flächen 35, 29 liegen aneinander an und gleiten aufeinander, wobei die Antriebsschraube 17 so weit in die Gewindebohrung 27 eingedreht wird, bis die kegelförmigen Flächen 37, 41 aufeinander liegen. Es ergibt sich damit eine Verspannung zwischen den Flächen 37 und 35, die zu einer spielfreien Befestigung des Nabenteils 7 auf der Lenkwelle 5 führen.

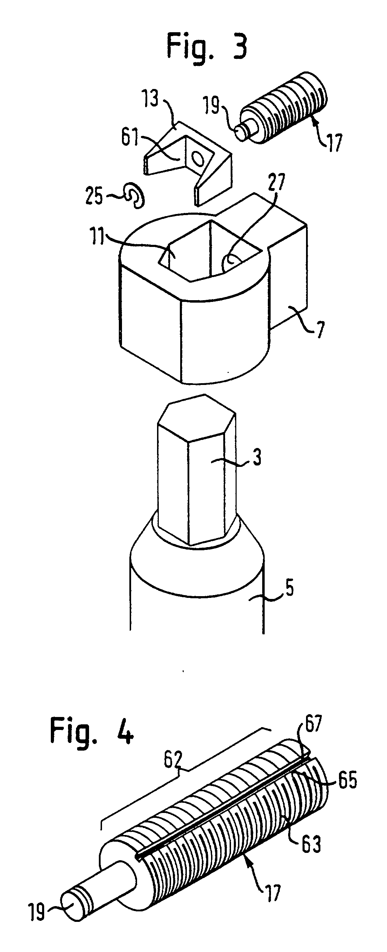

Bei der in Fig. 3 dargestellten Ausführungsform ist als Unterschied zu der in Fig. 1 dargestellten der Keil 13 mit einem tieferen Einschnitt 61 versehen, wogegen in Fig. 1 der Einschnitt nur geringstfügig ausgebildet ist. Bei dieser Ausführungsform ist jedoch kein Schlitz 23 notwendig, denn über den tiefen Einschnitt 61 kann der Sicherungsring 25 unmittelbar auf den Zapfen 19 aufgeschoben werden.

Damit eine Art Schraubensicherung vorhanden ist, die auf einfache Weise ermöglicht wird, hat die Antriebsschraube 17 im Bereich des Gewindeabschnitts 62 ein Feingewinde 63. Als zusätzliche Sicherung, um eine selbstsichernde Schraubverbindung zu erreichen, ist eine axiale Nut 65 eingefräst, in die ein elastischer Sicherungsfaden 67 aus Nylon eingelegt ist. Der Faden wird beim Eindrehen der Antriebsschraube 17 elastisch verformt und erhöht das Drehmoment. Die so geschaffene Sicherung erlaubt eine wiederholte Montage und Demontage der Lenkradbefestigung. Das Feingewinde trägt unterstützend zur Sicherung der Verbindung bei.

## Patentansprüche

1. Fahrzeuglenkradbefestigung, durch die das Fahrzeuglenkrad an einer Lenkwelle (5) lösbar arretiert ist, mit einer Lenkwelle (5), die ein mit einem drehmomentübertragenden Profil versehenes freies Ende (3) hat, wobei das freie Ende (3) ferner eine radiale Nut mit einer Keilfläche (35) aufweist, und mit einem lenkradseitigen Nabenteil (7), das eine dem Profil entsprechend geformte Ausnehmung (11) und eine radiale Führungsfläche (15) aufweist, längs der ein Keil (13) in und außer Eingriff mit der Nut (31) verstellbar ist, wobei mit dem Keil (13) eine Antriebsschraube (17) drehbar gekoppelt ist, die in einer Gewindebohrung (27) im Nabenteil sitzt, **dadurch gekennzeichnet, daß** das freie Ende (3) der Lenkwelle (5) ein Mehrkantprofil und das Nabenteil (7) eine dem Mehrkantprofil entsprechende, mehreckige Ausnehmung (11) besitzt und daß der Keil (13) eine mittige Bohrung aufweist, in die ein axialer Zapfen (19) der Antriebsschraube (17) drehbar aufgenommen ist, wobei eine als separates Teil ausgebildete Sicherung die Antriebsschraube (17) und den Keil (13) in axialer Richtung der Schraube verbindet.

2. Fahrzeuglenkradbefestigung nach Anspruch 1, **dadurch gekennzeichnet, daß** der Keil (13) und die Antriebsschraube (17) zerstörungsfrei lösbar miteinander verbunden sind.

3. Fahrzeuglenkradbefestigung nach Anspruch 1 oder 2, **dadurch gekennzeichnet, daß** die Antriebsschraube (17) radial auf die gedachte Mittelachse (A) der Lenkwelle (5) gerichtet ist.

4. Fahrzeuglenkradbefestigung nach einem der vorhergehenden Ansprüche, **dadurch gekennzeichnet, daß** der Keil (13) zur Lenkwelle (5) so ausgerichtet ist, daß die vom Keil (13) auf die Lenkwelle (5) ausgeübte resultierende Kraft (F) radial auf die gedachte Mittelachse (A) der Lenkwelle (5) gerichtet ist.

5. Fahrzeuglenkradbefestigung nach einem der vorhergehenden Ansprüche, **dadurch gekennzeichnet, daß** das Nabenteil (7) so ausgebildet ist, daß der Keil (13) axial über die Ausnehmung (11) an die Führungsfläche (15) angelegt und anschließend radial auf ihr verschoben werden kann.

6. Fahrzeuglenkradbefestigung nach Anspruch 5, **dadurch gekennzeichnet, daß** das Nabenteil (7) so ausgebildet ist, daß nach dem Einsetzen des Keils (13) die Antriebsschraube (17) radial von außen in die Gewindebohrung (27) eindrehbar ist und Nabenteil (7) und Antriebsschraube (17) anschließend lösbar miteinander verbunden werden können.

7. Fahrzeuglenkradbefestigung nach einem der vorhergehenden Ansprüche, **dadurch gekennzeichnet, daß** zwischen Nabenteil (7) und Lenkwelle (5) eine Codierung vorgesehen ist, die ein Aufstecken des Nabenteils (7) auf die Lenkwelle (5) nur in einer Winkelstellung erlaubt.

8. Fahrzeuglenkradbefestigung nach einem der vorhergehenden Ansprüche, **dadurch gekennzeichnet, daß** an das freie Ende (3) eine kegelförmige Fläche (37) an der Lenkwelle (5) angrenzt, die relativ zur Keilfläche (35) so ausgebildet ist, daß das Nabenteil (7) zwischen Keilfläche (35) und kegelförmiger Fläche (37) verspannt ist.

9. Fahrzeuglenkradbefestigung nach einem der vorhergehenden Ansprüche, **dadurch gekennzeichnet, daß** die Antriebsschraube (17) ein Feingewinde (63) aufweist.

10. Fahrzeuglenkradbefestigung nach einem der vorhergehenden Ansprüche, **dadurch gekennzeichnet, daß** die Antriebsschraube (17) und die Gewindebohrung (27) als selbstsichernde Schraubverbindung ausgebildet sind.

11. Fahrzeuglenkradbefestigung nach Anspruch 10, **dadurch gekennzeichnet, daß** die Antriebsschraube (17) einen Gewindeabschnitt (61) mit einer Nut (65) aufweist, in die ein Sicherungsfaden (67) eingelegt ist.

## Claims

1. A vehicle steering wheel attachment, by means of which the vehicle steering wheel is detachably arrested on a steering shaft (5), comprising a steering shaft (5) which has a free end (3) provided with a torque-transmitting profile, the free end (3) further having a radial groove with a wedge surface (35), and comprising a hub portion (7) on the side of the steering wheel, the hub portion having a recess (11) shaped in correspondence with the profile and a radial guide surface (15) along which a wedge (13) can be moved in and out of engagement with the groove (31), a drive screw (17) seated in a threaded bore (27) in the hub portion being rotatably coupled with the wedge (13), **characterized in that** the free end (3) of the steering shaft (5) has a multiple-cornered profile and the hub portion (7) has a multiple-cornered recess (11) corresponding to the multiple-cornered profile, and that the wedge (13) has a central bore in which an axial pin (19) of the drive screw (17) is rotatably accommodated, a locking means that is configured as a separate part connecting the drive screw (17) and the wedge (13) in the axial direction of the screw.

2. The vehicle steering wheel attachment as claimed in claim 1, **characterized in that** the wedge (13) and the drive screw (17) are connected with each other so as to be detachable without being destroyed.

3. The vehicle steering wheel attachment as claimed in claim 1 or 2, **characterized in that** the drive screw (17) is radially directed to the imaginary center line (A) of the steering shaft (5).

4. The vehicle steering wheel attachment as claimed in any of the preceding claims, **characterized in that** the wedge (13) is oriented with respect to the steering shaft (5) in such a way that the resultant force (F) exerted by the wedge (13) on the steering shaft (5) is radially directed to the imaginary center line (A) of the steering shaft (5).

5. The vehicle steering wheel attachment as claimed in any of the preceding claims, **characterized in that** the hub portion (7) is designed such that the wedge (13) can be axially placed against the guide surface (15) via the recess (11) and can then be radially shifted thereon.

6. The vehicle steering wheel attachment as claimed in claim 5, **characterized in that** the hub portion (7) is designed such that upon inserting the wedge (13) the drive screw (17) can be screwed into the threaded bore (27) radially from outside, and the hub portion (7) and the drive screw (17) can subsequently be detachably connected with each other.

7. The vehicle steering wheel attachment as claimed in any of the preceding claims, **characterized in that** between the hub portion (7) and the steering shaft (5) a coding is provided which allows mounting the hub portion (7) onto the steering shaft (5) in only one angular position.

8. The vehicle steering wheel attachment as claimed in any of the preceding claims, **characterized in that** adjoining the free end (3) is a conical surface (37) on the steering shaft (5), which is designed in relation to the wedge surface (35) such that the hub portion (7) is clamped between the wedge surface (35) and the conical surface (37).

9. The vehicle steering wheel attachment as claimed in any of the preceding claims, **characterized in that** the drive screw (17) has a fine thread (63).

10. The vehicle steering wheel attachment as claimed in any of the preceding claims, **characterized in that** the drive screw (17) and the threaded bore (27) are designed as a self-locking screw connection.

11. The vehicle steering wheel attachment as claimed in claim 10, **characterized in that** the drive screw (17) has a threaded portion (61) with a groove (65) having a safety thread (67) inserted therein.

## Revendications

1. Fixation de volant de direction de véhicule, par laquelle le volant de direction est bloqué de manière détachable sur un arbre de direction (5), comportant un arbre de direction (5) qui a une extrémité (3) libre pourvue d'un profil transmettant le couple de rotation, l'extrémité libre (3) présentant en outre une gorge radiale avec une surface en forme de rampe (35), et comportant une partie de moyen (7) côté volant de direction, qui présente un évidement (11) formé en correspondance avec le profil et une surface de guidage radiale (15) le long de laquelle une clavette (13) peut être mise en engagement et hors d'engagement avec la gorge (31), une vis d'entraînement (17) qui est logée dans un alésage taraudé (27) dans la partie de moyeu étant accouplée en rotation avec la clavette (13), **caractérisée en ce que** l'extrémité (3) libre de l'arbre de direction (5) possède un profil à plusieurs arêtes, et la partie de moyeu (7) possède un évidement (11) à plusieurs arêtes correspondant au profil à plusieurs arêtes, et **en ce que** la clavette (13) présente un perçage central dans lequel un tenon (19) axial de la vis d'entraînement (17) est reçu en rotation, un élément de sécurité réalisé sous forme d'élément séparé reliant la vis d'entraînement (17) et la clavette (13) en direction axiale de la vis.

2. Fixation de volant de direction de véhicule, **caractérisée en ce que** la clavette (13) et la vis d'entraînement (17) sont reliées l'une à l'autre de manière à pouvoir être détachées sans être détruites.

3. Fixation de volant de direction de véhicule selon la revendication 1 ou 2, **caractérisée en ce que** la vis d'entraînement (17) est dirigée radialement sur l'axe médian imaginaire (A) de l'arbre de direction (5).

4. Fixation de volant de direction de véhicule selon l'une des revendications précédentes, **caractérisée en ce que** la clavette (13) est orientée vers l'arbre de direction (5) de telle sorte que la force (F) résultante exercée par la clavette (13) sur l'arbre de direction (5) est dirigée radialement sur l'axe médian (A) imaginaire de l'arbre de direction (5).

5. Fixation de volant de direction de véhicule selon l'une des revendications précédentes, **caractérisée en ce que** la partie de moyeu (7) est réalisée de telle sorte que la clavette (13) peut être appliquée par l'intermédiaire de l'évidement (11) radialement sur la surface de guidage (15) et peut ensuite être déplacée radialement sur celle-ci.

6. Fixation de volant de direction de véhicule selon la revendication 5, **caractérisée en ce que** la partie de moyeu (7) est réalisée de telle sorte qu'après avoir inséré la clavette (13), la vis d'entraînement (17) peut être vissée radialement depuis l'extérieur dans l'alésage taraudé (27), et la partie de moyeu (7) et la vis d'entraînement (17) peuvent ensuite être reliées de manière détachable l'une à l'autre.

7. Fixation de volant de direction de véhicule selon l'une des revendications précédentes, **caractérisée en ce qu'**entre la partie de moyeu (7) et l'arbre de direction (5) est prévu un repère qui permet d'emboîter la partie de moyeu (7) sur l'arbre de direction (5) seulement dans une position angulaire.

8. Fixation de volant de direction de véhicule selon l'une des revendications précédentes, **caractérisée en ce qu'**à l'extrémité (3) libre, une surface en forme de cône (37) est adjacente à l'arbre de direction (5), et elle est réalisée de telle sorte par rapport à la surface en forme de rampe (35) que la partie de moyeu (7) est serrée entre la surface en forme de rampe (35) et la surface en forme de cône (37).

9. Fixation de volant de direction de véhicule selon l'une des revendications précédentes, **caractérisée en ce que** la vis d'entraînement (17) présente un filetage à pas fin (63).

10. Fixation de volant de direction de véhicule selon l'une des revendications précédentes, **caractérisée en ce que** la vis d'entraînement (17) et l'alésage taraudé (27) sont réalisés en tant que liaison vissée autobloquante.

11. Fixation de volant de direction de véhicule selon la revendication 10, **caractérisée en ce que** la vis d'entraînement (17) présente un tronçon fileté (61) avec une gorge (65) dans laquelle est inséré un fil de sécurité.
